# EUROPEAN PATENT APPLICATION

(11) **EP 4 480 973 A1**
(43) Date of publication of application: **25.12.2024**
(21) Application number: 23756622.9
(22) Date of filing: 15.02.2023
(51) Int. Cl.: C08F 36/04, C08F 4/54, C08F 2/38

(54) **CATALYST COMPOSITION PREPARATION METHOD AND CONJUGATED DIENE-BASED POLYMER PREPARATION METHOD**

(30) Priority: 17.02.2022 KR 20220021076
(71) Applicant: LG Chem, Ltd., Yeongdeungpo-gu Seoul 07336 (KR)
(72) Inventor: KANG, Suk Youn, Daejeon 34122 (KR); LEE, Tae Chul, Daejeon 34122 (KR); SOHN, Hae Sung, Daejeon 34122 (KR); KIM, Dong Hui, Daejeon 34122 (KR); PARK, Sung Ho, Daejeon 34122 (KR); BAE, Ju Ryang, Daejeon 34122 (KR); CHOI, Seo Won, Daejeon 34122 (KR)
(74) Representative: Goddar, Heinz J.
(86) International application number: PCT/KR2023/002200
(87) International publication number: WO 2023/158210

(57) **Abstract**

The present invention relates to a method for continuously preparing a catalyst composition for preparing a catalyst composition having improved catalyst activity by pretreating a hydrogen-bonded lanthanide rare earth element compound and/or an oligomer type of a lanthanide rare earth element compound, which induce the deterioration of the catalyst activity, and a method for preparing a conjugated diene-based polymer using the catalyst composition prepared thereby.

## Description

### TECHNICAL FIELD

### [Cross-reference to Related Applications]

The present application claims the benefit of priority based on Korean Patent Application No. 10-2022-0021076, filed on February 17, 2022, the entire contents of which are incorporated herein by reference.

### [Technical Field]

The present invention relates to a method for preparing a catalyst composition for preparing a conjugated diene-based polymer, and a method for preparing a conjugated diene-based polymer using the same.

### BACKGROUND ART

Recently, according to the growing attention on saving energy and environmental issues, the decrease of the fuel consumption ratio of cars is required. As a method for accomplishing the requirement, a method for decreasing the molecular weight distribution, while increasing the cis bond content and linearity of polybutadiene in a rubber composition for forming tires has been suggested.

Polybutadiene may be prepared using a Ziegler-Natta catalyst, and the Ziegler-Natta catalyst is prepared by activating an organic acid metal compound with an alkyl aluminum and an alkyl aluminum halide compound, and the catalyst prepared is reacted with a 1,3-butadiene monomer to prepare polybutadiene.

Here, the organic acid metal compound includes titanium-based, nickel-based, cobalt-based and lanthanum-based compounds, and lanthanide rare earth element compounds are mainly used in view of increasing the cis bond content and linearity and decreasing the molecular weight distribution of polybutadiene.

The examples of the lanthanide rare earth element compound include neodymium-based compounds, particularly, neodymium versatate (NdV). The lanthanide rare earth element compound may be activated through alkylation using an alkyl aluminum compound, and then, through halogenations using an alkyl aluminum halide compound, and in order to stabilize a catalyst, a 1,3-butadiene monomer may be injected during the alkylation for performing.

In this case, the lanthanide rare earth element compound such as NdV is not present as a single compound type but is present as a hydrogen-bonded type and/or an oligomer type by humidity and an aliphatic compound used during a preparation process (Non-patent Document 1 and Non-patent Document 2). However, if alkylation is performed with respect to the hydrogen-bonded lanthanide rare earth element compound and/or the oligomer type of the lanthanide rare earth element compound right away, the alkylation takes long time when compared to a case where the lanthanide rare earth element compound is present as a single compound, and there are problems in that the alkylation is insufficiently performed. If such a lanthanide rare earth element compound that has been insufficiently undergone the alkylation is injected into a halogenation reactor for performing the halogenation, it may be a factor of deteriorating catalyst activity and may arise issues of increasing the contamination of a catalyst preparation apparatus.

US Registration Patent Publication No. 9056303 (Patent Document 1) discloses a method for manufacturing a catalyst system using multiple alkylation reactors. In case of continuously preparing in order to solve defects during manufacturing a catalyst system in a batch mode, Patent Document 1 particularly specifies the type of reactors, and controlling the output flux of the catalyst system in a line outlet to a required degree to remain in a suitable residual time range for alkylation and chlorination so as to prevent the formation of gel in the reactor and to secure the flexibility of the salt of an alkylating agent and a rare earth element, which may influence the degree of catalyst activity. In addition, Japanese Registration Patent Publication No. 5072191 (Patent Document 2) discloses a method for preparing a catalyst for polymerizing a conjugated diene, including injecting an alkyl aluminum compound and an alkyl aluminum hydride in order. However, in Patent Documents 1 and 2, only alkylation reaction is directly performed with respect to a lanthanide compound during preparing a catalyst system and a catalyst for polymerizing a conjugated diene, but the type of the lanthanide compound injected and influence on catalyst activity thereby are not recognized.

### [Prior Art Documents]

### [Patent Documents]

(Patent Document 1) US 9056303 B2
(Patent Document 2) JP 5072191 B2

### [Non-patent Documents]

(Non-patent Document 1) "A Highly Reactive and Monomeric Neodymium Catalyst", Macromolecules 2002, 35, 13, 4875-4879 (https://doi.org/10.1021/ma012123p)
(Non-patent Document 2) "Living and non-living Ziegler-Natta catalysts: electronic properties of active site", Polymer, Volume 44, Issue 21, October 2003, Pages 6555-6558 (https://doi.org/10.1016/S0032-3861(03)00698-0)

### DISCLOSURE OF THE INVENTION

### TECHNICAL PROBLEM

The task for solving in the present invention is to improve catalyst activity in continuously preparing a catalyst composition for polymerizing polybutadiene, by pre-treating a hydrogen-bonded lanthanide rare earth element compound and/or an oligomer type of a lanthanide rare earth element compound, which induce the deterioration of the catalyst activity, prior to alkylation.

That is, in order to solve the defects described in the background art of the invention, an object of the present invention is to provide a method for continuously preparing a catalyst composition having improved catalyst activity by pre-treating in advance a hydrogen-bonded lanthanide rare earth element compound and/or an oligomer type of a lanthanide rare earth element compound, which induce the deterioration of the catalyst activity.

In addition, another object of the present invention is to provide a method for preparing a conjugated diene-based polymer having high cis bond content and linearity and narrow molecular weight distribution by using the catalyst composition prepared by the method for preparing a catalyst composition above.

### TECHNICAL SOLUTION

To solve the above-described tasks, the present invention provides a method for preparing a catalyst composition and a method for preparing a conjugated diene-based polymer.
(1) The present invention provides a method for preparing a catalyst composition, comprising: a step of performing pre-treatment reaction of a hydrogen bond, an oligomer type, or a combination thereof on a lanthanide rare earth element compound (S10); a step of alkylation of mixing and reacting the lanthanide rare earth element compound of which the hydrogen bond, the oligomer type, or the combination thereof is pre-treated in step (S10), with an alkylating agent (S20); and a step of halogenation of mixing and reacting the alkylated lanthanide rare earth element compound in step (S20), with a halogen compound (S30), wherein the step (S20) is continuously performed in multiple reactors connected in series.
(2) The present invention provides the method for preparing a catalyst composition according to (1), wherein the step (S10) is performed by mixing and reacting the lanthanide rare earth element compound, with one or more trialkyl aluminums selected from the group consisting of trimethyl aluminum and triethyl aluminum.
(3) The present invention provides the method for preparing a catalyst composition according to (2), wherein the step (S10) is performed before the alkylation of the lanthanide rare earth element compound by the trialkyl aluminum occurs.
(4) The present invention provides the method for preparing a catalyst composition according to any one among (1) to (3), wherein the lanthanide rare earth element compound is a neodymium compound represented by Formula 1. 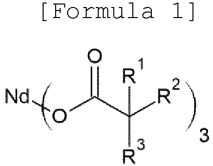 In Formula 1, R¹ to R³ are each independently hydrogen or an alkyl group of 1 to 12 carbon atoms, where R¹ to R³ are not all hydrogen.
(5) The present invention provides the method for preparing a catalyst composition according to any one among (1) to (4), wherein the lanthanide rare earth element is one or more selected from the group consisting of Nd(2-ethyl hexanoate)₃, Nd(2,2-dimethyl decanoate)₃, Nd(2,2-diethyl decanoate)₃, Nd(2,2-dipropyl decanoate)₃, Nd(2,2-dibutyl decanoate)₃, Nd(2,2-dihexyl decanoate)₃, Nd(2,2-dioctyl decanoate)₃, Nd(2-ethyl-2-propyl decanoate)₃, Nd(2-ethyl-2-butyl decanoate)₃, Nd(2-ethyl-2-hexyl decanoate)₃, Nd(2-propyl-2-butyl decanoate)₃, Nd(2-propyl-2-hexyl decanoate)₃, Nd(2-propyl-2-isopropyl decanoate)₃, Nd(2-butyl-2-hexyl decanoate)₃, Nd(2-hexyl-2-octyl decanoate)₃, Nd(2,2-diethyl octanoate)₃, Nd(2,2-dipropyl octanoate)₃, Nd(2,2-dibutyl octanoate)₃, Nd(2,2-dihexyl octanoate)₃, Nd(2-ethyl-2-propyl octanoate)₃, Nd(2-ethyl-2-hexyl octanoate)₃, Nd(2,2-diethyl nonanoate)₃, Nd(2,2-dipropyl nonanoate)₃, Nd(2,2-dibutyl nonanoate)₃, Nd(2,2-dihexyl nonanoate)₃, Nd(2-ethyl-2-propyl nonanoate)₃, and Nd(2-ethyl-2-hexyl nonanoate)₃.
(6) The present invention provides the method for preparing a catalyst composition according to any one among (1) to (5), wherein the alkylating agent is an alkyl aluminum compound represented by Formula 2.

   [Formula 2] AlR⁴R⁵R⁶

   In Formula 2, R⁴ to R⁶ are each independently hydrogen or an alkyl group of 1 to 12 carbon atoms, where R⁴ to R⁶ are not all hydrogen, and if all of R⁴ to R⁶ are alkyl groups, the carbon number of the alkyl group is 3 to 12.
(7) The present invention provides the method for preparing a catalyst composition according to any one among (1) to (6), wherein the alkylating agent is a dialkyl aluminum hydride.
(8) The present invention provides the method for preparing a catalyst composition according to any one among (1) to (7), wherein the pre-treatment reaction in the step (S10), the alkylation in the step (S20), or the pre-treatment reaction in the step (S10) and the alkylation in the step (S20) are performed by including a conjugated diene-based monomer.
(9) The present invention provides the method for preparing a catalyst composition according to any one among (1) to (8), wherein the halogen compound is one or more selected from the group consisting of an alkyl aluminum halide represented by Formula 3 and an alkyl aluminum sesquihalide represented by Formula 4.

   [Formula 3] AlR⁷R⁸R⁹

   In Formula 3, R⁷ to R⁹ are each independently a halogen group or an alkyl group of 1 to 12 carbon atoms, where R⁷ to R⁹ are not all halogen groups. 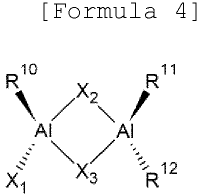
   In Formula 4, R¹⁰ to R¹² are each independently an alkyl group of 1 to 12 carbon atoms, and X₁ to X₃ are each independently a halogen group.
(10) The present invention provides the method for preparing a catalyst composition according to any one among (1) to (9), wherein the halogen compound is one or more selected from the group consisting of a dialkyl aluminum halide and an alkyl aluminum sesquihalide.
(11) The present invention provides the method for preparing a catalyst composition according to any one among (1) to (10), wherein the step (S10), the step (S20) and the step (S30) are respectively performed in an individual reactor among the reactors connected in series.
(12) The present invention provides the method for preparing a catalyst composition according to any one among (1) to (11), wherein the step (S10), the step (S20) and the step (S30) are performed continuously.
(13) The present invention provides the method for preparing a catalyst composition according to any one among (1) to (12), wherein the alkylating agent is injected in installments to the multiple reactors connected in series.
(14) The present invention provides a method for preparing a conjugated diene-based polymer, comprising a step of polymerizing a conjugated diene-based monomer in the presence of the catalyst composition prepared by the method for preparing a catalyst composition according to any one among (1) to (13), in a hydrocarbon solvent to prepare an active polymer (S100).
(15) The present invention provides a conjugated diene-based polymer prepared by the method for preparing a conjugated diene-based polymer according to (14).
(16) The present invention provides a rubber composition comprising the conjugated diene-based polymer according to (15).

### ADVANTAGEOUS EFFECTS

The catalyst composition prepared according to the method for preparing a catalyst composition of the present invention is prepared by pre-treating a hydrogen-bonded lanthanide rare earth element compound and/or an oligomer type of a lanthanide rare earth element compound, which induce the deterioration of the catalyst activity, prior to alkylation, and has excellent catalyst activity.

According to the method for preparing a catalyst composition of the present invention, a catalyst composition may be continuously prepared, the productivity of the catalyst composition and a conjugated diene-based polymer using the same may be improved, and more uniform quality may be secured.

The conjugated diene-based polymer prepared according to the method for preparing a conjugated diene-based polymer of the present invention has the low lanthanide rare earth element content remaining in the conjugated diene-based polymer, high cis bond content and linearity, and narrow molecular weight distribution, due to high catalyst activity, and if applied to a rubber composition, excellent abrasion resistance and a low fuel consumption ratio may be shown.

### BEST MODE FOR CARRYING OUT THE INVENTION

Hereinafter, the present invention will be described in more detail in order to assist the understanding of the present invention.

It will be understood that words or terms used in the description and claims of the present invention shall not be interpreted as the meaning defined in commonly used dictionaries. It will be further understood that the words or terms should be interpreted as having a meaning that is consistent with their meaning of the technical idea of the invention, based on the principle that an inventor may properly define the meaning of the words or terms to best explain the invention.

### Method for preparing catalyst composition

The present invention provides a method for preparing a catalyst composition. The catalyst composition prepared by the method for preparing a catalyst composition may be a catalyst composition for polymerizing a conjugated diene-based polymer.

According to an embodiment of the present invention, the method for preparing a catalyst composition may include: a step of performing pre-treatment reaction of a hydrogen bond, an oligomer type, or a combination thereof on a lanthanide rare earth element compound (S10); a step of alkylation reaction of mixing and reacting the lanthanide rare earth element compound of which the hydrogen bond, the oligomer type, or the combination thereof is pre-treated in step (S10), with an alkylating agent (S20); and a step of halogenation of mixing and reacting the alkylated lanthanide rare earth element compound in step (S20), with a halogen compound (S30), wherein the step (S20) may be continuously performed in multiple reactors connected in series.

As described in the background art of the present invention, the lanthanide rare earth element compound is not present as a single compound type but is present as a hydrogen-bonded type and/or an oligomer type by humidity and an aliphatic compound used during a preparation process (see Non-patent Document 1 and Non-patent Document 2). However, if alkylation is performed with respect to the hydrogen-bonded lanthanide rare earth element compound and/or the oligomer type of the lanthanide rare earth element compound right away, the alkylation takes long time when compared to a case where the lanthanide rare earth element compound is present as a single compound, and there are problems in that the alkylation is insufficiently performed. If such a lanthanide rare earth element compound that has been insufficiently undergone the alkylation is injected into a halogenation reactor for performing the halogenation, it may be a factor of deteriorating catalyst activity and may arise issues of increasing the contamination of a catalyst preparation apparatus. However, in the method for preparing the catalyst composition according to the present invention, the hydrogen-bonded lanthanide rare earth element compound and/or the oligomer type of the lanthanide rare earth element compound are pre-treated prior to the alkylation according to the step (S10), and catalyst activity may be improved. Here, the pre-treatment may mean minimizing, further removing the hydrogen-bonded lanthanide rare earth element compound and/or the oligomer type of the lanthanide rare earth element compound, prior to alkylation.

According to an embodiment of the present invention, the step (S10) may be performed by mixing and reacting the lanthanide rare earth element compound with one or more trialkyl aluminums selected from the group consisting of trimethyl aluminum and triethyl aluminum. It is known that the trimethyl aluminum and the triethyl aluminum may be used as the alkylating agent of the alkylation. However, if the trimethyl aluminum and triethyl aluminum are not used for the pre-treatment of the step (S10) as in the present invention but are simply used as the alkylating agents, the lanthanide rare earth element compound may be led only to the alkylation according to the purpose, and this requires long time for the alkylation and induces defects of insufficient progress of the alkylation. In this respect, the step (S10) may be performed until a point just before arising the alkylation by one or more trialkyl aluminums selected from the group consisting of trimethyl aluminum and triethyl aluminum with respect to the lanthanide rare earth element compound. Meanwhile, trialkyl aluminum and/or dialkyl aluminum hydride, which may be used as alkylating agents other than the trimethyl aluminum and the triethyl aluminum, may insufficiently induce the pre-treatment of the hydrogen bond, the oligomer type, or the combination thereof with respect to the lanthanide rare earth element compound, and may be unsuitable as the trialkyl aluminum compound for the pre-treatment of the step (S10).

According to an embodiment of the present invention, the step (S10) may be performed by injecting one or more trialkyl aluminums selected from the group consisting of trimethyl aluminum and triethyl aluminum in 1 mol or more, 2 mol or more, 3 mol or more, 4 mol or more, 5 mol or more, 6 mol or more, 7 mol or more, 8 mol or more, 9 mol or more, or 10 mol or more, and 20 mol or less, 19 mol or less, 18 mol or less, 17 mol or less, 16 mol or less, 15 mol or less, 14 mol or less, 13 mol or less, 12 mol or less, 11 mol or less, or 10 mol or less with respect to 1 mol of the lanthanide rare earth element compound.

According to an embodiment of the present invention, the step (S10) may be performed at a temperature of -20°C or more, -15°C or more, or -10°C or more, and at a temperature of 40°C or less, 35°C or less, 30°C or less, 25°C or less, or 20°C or less.

According to an embodiment of the present invention, the step (S10) may be performed for 10 minutes or more, 15 minutes or more, 20 minutes or more, 25 minutes or more, or 30 minutes or more, and 1 hour or less, 50 minutes or less, 40 minutes or less, or 30 minutes or less.

According to an embodiment of the present invention, by controlling the molar ratio, reaction temperature and reaction time of the lanthanide rare earth element compound with one or more trialkyl aluminums selected from the group consisting of trimethyl aluminum and triethyl aluminum, the efficiency of the pre-treatment of the hydrogen bond, the oligomer type or the combination thereof on the lanthanide rare earth element compound in the step (S10) may be improved even further.

According to an embodiment of the present invention, the lanthanide rare earth element compound may be a neodymium compound, particularly, neodymium carboxylates (for example, neodymium acetate, neodymium acrylate, neodymium methacrylate, neodymium gluconate, neodymium citrate, neodymium fumarate, neodymium lactate, neodymium maleate, neodymium oxalate, neodymium 2-ethylhexanoate, neodymium neodecanoate, etc.); organic phosphates (for example, neodymium dibutyl phosphate, neodymium dipentyl phosphate, neodymium dihexyl phosphate, neodymium diheptyl phosphate, neodymium dioctyl phosphate, neodymium bis (1-methyl heptyl) phosphate, neodymium bis (2-ethylhexyl) phosphate, neodymium didecyl phosphate, etc.); organic phosphonates (for example, neodymium butyl phosphonate, neodymium pentyl phosphonate, neodymium hexyl phosphonate, neodymium heptyl phosphonate, neodymium octyl phosphonate, neodymium (1-methylheptyl) phosphonate, neodymium (2-ethylhexyl) phosphonate, neodymium decyl phosphonate, neodymium dodecyl phosphonate, neodymium octadecyl phosphonate, etc.); organic phosphinates (for example, neodymium butyl phosphinate, neodymium pentyl phosphinate, neodymium hexyl phosphinate, neodymium heptyl phosphinate, neodymium octyl phosphinate, neodymium (1-methyl heptyl) phosphinate, neodymium (2-ethylhexyl) phosphinate, etc.); carbamates (for example, neodymium dimethyl carbamate, neodymium diethyl carbamate, neodymium diisopropyl carbamate, neodymium dibutyl carbamate, neodymium dibenzyl carbamate, etc.); dithio carbamates (for example, neodymium dimethyldithio carbamate, neodymium diethyldithio carbamate, deodymium diisopropyl dithio carbamate, neodymium dibutyldithio carbamate, etc.); xanthogenates (for example, neodymium methyl xanthogenate, neodymium ethyl xanthogenate, neodymium isopropyl xanthogenate, neodymium butyl xanthogenate, neodymium benzyl xanthogenate, etc.); β-diketonates (for example, neodymium acetylacetonate, neodymium trifluoroacetyl acetonate, neodymium hexafluoroacetyl acetonate, neodymium benzoyl acetonate, etc.); alkoxides or allyloxides (for example, neodymium methoxide, neodymium ethoxide, neodymium isopropoxide, neodymium phenoxide, neodymium nonyl phenoxide, etc.); halides or pseudo halides (neodymium fluoride, neodymium chloride, neodymium bromide, neodymium idodide, neodymium cyanide, neodymium cyanate, neodymium thiocyanate, neodymium azide, etc.); oxyhalides (for example, neodymium oxyfluoride, neodymium oxychloride, neodymium oxybromide, etc.); or organic neodymium compounds including one or more rare earth element-carbon bonds (for example, Cp₃Ln, Cp₂LnR, Cp₂LnCl, CpLnCl₂, CpLn (cyclooctatetraene), (C₅Me₅)₂LnR, LnR₃, Ln(allyl)₃, Ln(allyl)₂Cl, etc., where Ln is a rare earth metal element, and R is a hydrocarbyl group), etc., and may include any one or a mixture of two or more thereof.

According to an embodiment of the present invention, the lanthanide rare earth element compound may be a neodymium compound represented by Formula 1.

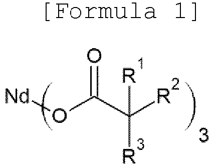

In Formula 1, R¹ to R³ are each independently hydrogen or an alkyl group of 1 to 12 carbon atoms, where R¹ to R³ may not be all hydrogen. In a particular embodiment, in Formula 1, R¹ may be an alkyl group of 4 to 12 carbon atoms, and R² and R³ may be each independently hydrogen or an alkyl group of 1 to 8 carbon atoms, where R² and R³ may not be all hydrogen. In a more particular embodiment, in Formula 1, R¹ may be an alkyl group of 6 to 8 carbon atoms, and R² and R³ may be each independently hydrogen or an alkyl group of 2 to 6 carbon atoms, where R² and R³ may not be all hydrogen.

According to an embodiment of the present invention, the lanthanide rare earth element compound may be one or more selected from the group consisting of Nd(2-ethyl hexanoate)₃ neodymium versatate, Nd(2,2-dimethyl decanoate)₃, Nd(2,2-diethyl decanoate)₃, Nd(2,2-dipropyl decanoate)₃, Nd(2,2-dibutyl decanoate)₃, Nd(2,2-dihexyl decanoate)₃, Nd(2,2-dioctyl decanoate)₃, Nd(2-ethyl-2-propyl decanoate)₃, Nd(2-ethyl-2-butyl decanoate)₃, Nd(2-ethyl-2-hexyl decanoate)₃, Nd(2-propyl-2-butyl decanoate)₃, Nd(2-propyl-2-hexyl decanoate)₃, Nd(2-propyl-2-isopropyl decanoate)₃, Nd(2-butyl-2-hexyl decanoate)₃, Nd(2-hexyl-2-octyl decanoate)₃, Nd(2,2-diethyl octanoate)₃, Nd(2,2-dipropyl octanoate)₃, Nd(2,2-dibutyl octanoate)₃, Nd(2,2-dihexyl octanoate)₃, Nd(2-ethyl-2-propyl octanoate)₃, Nd(2-ethyl-2-hexyl octanoate)₃, Nd(2,2-diethyl nonanoate)₃, Nd(2,2-dipropyl nonanoate)₃, Nd(2,2-dibutyl nonanoate)₃, Nd(2,2-dihexyl nonanoate)₃, Nd(2-ethyl-2-propyl nonanoate)₃ and Nd(2-ethyl-2-hexyl nonanoate)₃.

According to an embodiment of the present invention, the neodymium compound may include a carboxylate ligand including a substituent of an alkyl group with various lengths of 2 or more at an α-position, and induce steric change around a neodymium central metal to block entanglement phenomenon among compounds. Accordingly, effects of restraining oligomerization may be achieved during the polymerization of a conjugated diene-based polymer using the catalyst composition. In addition, such a neodymium-based compound has high solubility in a solvent, and a neodymium ratio positioned at the center moiety, which has difficulty in conversion into a catalyst active species, is reduced, and thus, effects of achieving a high conversion ratio into the catalyst active species may be shown.

According to an embodiment of the present invention, the solubility of the neodymium compound may be about 60 parts by weight or more with respect to 100 parts by weight of a nonpolar solvent at room temperature (25°C). The solubility of the neodymium compound means the degree of dissolution clearly without turbid phenomenon, and by showing such a high solubility, excellent catalyst activity may be shown.

According to an embodiment of the present invention, the step (S10) may be performed by including a conjugated diene-based monomer. A conjugated diene-based monomer used in the polymerization of a conjugated diene-based polymer using the catalyst composition prepared according to the present invention, is mixed with the catalyst composition in advance to form a pre-polymerized preforming or premix catalyst composition, thereby improving the activity of the catalyst composition even further. In addition, an active polymer thus prepared may be stabilized. The "preforming" may mean that a small amount of a conjugated diene-based monomer such as 1,3-butadiene is added to reduce the production possibility of the diverse active species of the catalyst composition in a catalyst system, and pre-polymerization in the catalyst composition system is performed together with the addition of 1,3-butadiene. In addition, the "premix" may mean a uniformly mixed state of each of the compounds without undergoing polymerization in the catalyst composition system.

According to an embodiment of the present invention, the conjugated diene-based monomer that may be injected in the step (S10) may be 1,3-butadiene or derivatives thereof such as 1,3-butadiene, 2,3-dimethyl-1,3-butadiene, and 2-ethyl-1,3-butadiene, 2-methyl-1,3-pentadiene, 1,3-pentadiene, 3-methyl-1,3-pentadiene, 4-methyl-1,3-pentadiene, 1,3-hexadiene, 2,4-hexadiene, or the like.

According to an embodiment of the present invention, if the step (S10) is performed by including the conjugated diene-based monomer, the conjugated diene-based monomer may be injected in 1 mol or more, 5 mol or more, 10 mol or more, 15 mol or more, or 20 mol or more, and 100 mol or less, 90 mol or less, 80 mol or less, 70 mol or less, 60 mol or less, or 50 mol or less with respect to 1 mol of the lanthanide rare earth element compound.

According to an embodiment of the present invention, the step (S20) is a step for performing alkylation with respect to the lanthanide rare earth element compound, and may be performed by mixing and reacting the lanthanide rare earth element compound of which hydrogen bond, oligomer type or combination thereof is pre-treated, with an alkylating agent.

According to an embodiment of the present invention, the alkylating agent may be an organometal compound that may transfer a hydrocarbyl group to other metal and may play the role of a co-catalyst. The alkylating agent may be an organometal compound that is soluble in a polymer solvent and contains a metal-carbon bond, such as an organoaluminum compound, an organomagnesium compound and an organolithium compound.

According to an embodiment of the present invention, the alkylating agent may be an organoaluminum compound, particularly, alkyl aluminum such as tri-n-propyl aluminum, triisopropyl aluminum, tri-n-butyl aluminum, triisobutyl aluminum, tri-t-butyl aluminum, tripentyl aluminum, trihexyl aluminum, tricyclohexyl aluminum, and trioctyl aluminum; dihydrocarbylaluminum hydride such as diethylaluminum hydride, di-n-propylaluminum hydride, diisopropylaluminum hydride, din-butylaluminum hydride, diisobutylaluminum hydride (DIBAH), di-n-octylaluminum hydride, diphenylaluminum hydride, di-p-tolylaluminum hydride, dibenzylaluminum hydride, phenylethylaluminum hydride, phenyl-n-propylaluminum hydride, phenylisopropylaluminum hydride, phenyl-n-butylaluminum hydride, phenylisobutylaluminum hydride, phenyl-n-octylaluminum hydride, p-tolylethylaluminum hydride, p-tolyl-n-propylaluminum hydride, p-tolylisopropylaluminum hydride, p-tolyl-n-butylaluminum hydride, p-tolylisobutylaluminum hydride, p-tolyl-n-octylaluminum hydride, benzylethylaluminum hydride, benzyl-n-propylaluminum hydride, benzylisopropylaluminum hydride, benzyl-n-butylaluminum hydride, benzylisobutylaluminum hydride and benzyl-n-octylaluminum hydride; hydrocarbylaluminum dihydride such as ethylaluminum dihydride, n-propylaluminum dihydride, isopropylaluminum dihydride, n-butylaluminum dihydride, isobutylaluminum dihydride, and n-octylaluminum dihydride.

According to an embodiment of the present invention, the alkylating agent may preferably be an alkyl aluminum compound in view of controlling the catalyst reaction and side reactions with regard to the lanthanide rare earth element compound of which hydrogen bond, oligomer type or combination thereof is pre-treated in the step (S10). In a particular embodiment, the alkylating agent may be an alkyl aluminum compound represented by Formula 2.

[Formula 2] AlR⁴R⁵R⁶

In Formula 2, R⁴ to R⁶ are each independently hydrogen or an alkyl group of 1 to 12 carbon atoms, where R⁴ to R⁶ are not all hydrogen, and if all of R⁴ to R⁶ are alkyl groups, the carbon number of the alkyl group may be 3 to 12. In a particular embodiment, in Formula 2, R⁴ to R⁶ may be each independently hydrogen or an alkyl group of 3 to 8 carbon atoms, where R⁴ to R⁶ are not all hydrogen, and if all of R⁴ to R⁶ are alkyl groups, the carbon number of the alkyl group may be 3 to 6. In a more particular embodiment, in Formula 2, R⁴ to R⁶ may be each independently hydrogen or an alkyl group of 3 to 6 carbon atoms, where R⁴ to R⁶ may not be not all hydrogen.

According to an embodiment of the present invention, the alkylating agent may be a dialkyl aluminum hydride in view of controlling the catalyst reaction and side reactions with regard to the lanthanide rare earth element compound of which hydrogen bond, oligomer type or combination thereof is pre-treated in the step (S10), and the types of the dialkyl aluminum hydride are the same as shown above. In a particular embodiment, the alkylating agent may be diisobutyl aluminum hydride.

According to an embodiment of the present invention, the alkylating agent may include two or more alkyl aluminum compounds. In a particular embodiment, the alkylating agent may include two or more selected from the group consisting of a dialkyl aluminum hydride and a trialkyl aluminum. In a more particular embodiment, the alkylating agent may include one or more of the dialkyl aluminum hydride and one or more trialkyl aluminum. In a more particular embodiment, the alkylating agent may include diisobutyl aluminum hydride and triisobutyl aluminum.

According to an embodiment of the present invention, the step (S20) may be performed by injecting the alkylating agent in 1 mol or more, 2 mol or more, 3 mol or more, 4 mol or more, 5 mol or more, 6 mol or more, 7 mol or more, 8 mol or more, 9 mol or more, 10 mol or more, 11 mol or more, 12 mol or more, 13 mol or more, 14 mol or more, or 15 mol or more, and 30 mol or less, 29 mol or less, 28 mol or less, 27 mol or less, 26 mol or less, 25 mol or less, 24 mol or less, 23 mol or less, 22 mol or less, 21 mol or less, 20 mol or less, 19 mol or less, 18 mol or less, 17 mol or less, 16 mol or less, or 15 mol or less, with respect to 1 mol of the lanthanide rare earth element compound of which hydrogen bond, oligomer type or combination thereof is pre-treated in the step (S10).

According to an embodiment of the present invention, the step (S20) may be performed at a temperature of -20°C or more, -15°C or more, -10°C or more, or -5°C or more, and at a temperature of 40°C or less, 35°C or less, 30°C or less, 25°C or less, or 20°C or less.

According to an embodiment of the present invention, the step (S20) may be performed for 10 minutes or more, 15 minutes or more, 20 minutes or more, 25 minutes or more, or 30 minutes or more, and 2 hours or less, 1 hour and 30 minutes or less, 1 hour or less, 50 minutes or less, 40 minutes or less, or 30 minutes or less.

According to an embodiment of the present invention, by controlling the molar ratio, reaction temperature and reaction time of the lanthanide rare earth element compound of which hydrogen bond, oligomer type or combination thereof is pre-treated in the step (S10) with the alkylating agent, the catalyst activity may be improved even further.

According to an embodiment of the present invention, the step (S20) may be performed by including a conjugated diene-based monomer according to the same purpose in the step (S10). In this case, if the step (S20) is performed by including the conjugated diene-based monomer, the step (S20) may be performed by including the conjugated diene-based monomer separately from the step (S10) or simultaneously.

According to an embodiment of the present invention, if the step (S20) is performed by including the conjugated diene-based monomer, the conjugated diene-based monomer may be injected in 1 mol or more, 5 mol or more, 10 mol or more, 15 mol or more, or 20 mol or more, and injected in 100 mol or less, 90 mol or less, 80 mol or less, 70 mol or less, 60 mol or less, or 50 mol or less, with respect to 1 mol of the lanthanide rare earth element compound of which hydrogen bond, oligomer type, or combination thereof is pre-treated in the step (S10).

According to an embodiment of the present invention, the step (S20) may be performed continuously in multiple reactors connected in series. In this case, the alkylation may be performed in the multiple reactors connected in series, and the alkylation may be sufficiently performed to improve the activity of the catalyst composition even further. In this case, the alkylating agent may be injected only into the first reactor among the multiple reactors connected in series for performing the step (S20), or injected in installments into the multiple reactors connected in series for performing the step (S20). If the alkylating agent is injected in installments into the multiple reactors, the reactor for injecting the alkylating agent may be selected according to need. In addition, the type of the alkylating agents injected in installments into the multiple reactors connected in series may be the same or different.

According to an embodiment of the present invention, the flowing of the reactant in the multiple reactors connected in series in the step (S20) may be each independently performed by a top-down method or a bottom-up method.

According to an embodiment of the present invention, at least one or more reactors among the multiple reactors connected in series in the step (S20) may include a pipe type reactor equipped with a line mixer. In this case, by letting the reactant staying in the pipe type reactor connected between the reactors connected in series, continuous mixing may be performed, and the alkylation may be sufficiently performed even further.

According to an embodiment of the present invention, the step (S30) is a step for performing halogenation with respect to the lanthanide rare earth element compound alkylated in the step (S20), and may be performed by mixing and reacting the lanthanide rare earth element compound alkylated in the step (S20) with a halogen compound.

According to an embodiment of the present invention, the halogen compound may be a diatomic halogen, an interhalogen compound, a hydrogen halide, an organic halide, a nonmetal halide, a metal halide, or an organometal halide, etc.

According to an embodiment of the present invention, the diatomic halogen may include fluorine, chlorine, bromine, or iodine.

According to an embodiment of the present invention, the interhalogen compound may include iodine monochloride, iodine monobromide, iodine trichloride, iodine pentafluoride, iodine monofluoride, iodine trifluoride, etc.

According to an embodiment of the present invention, the hydrogen halide may include hydrogen fluoride, hydrogen chloride, hydrogen bromide, or hydrogen iodide.

According to an embodiment of the present invention, the organic halide may include t-butyl chloride (t-BuCl), t-butyl bromide, allyl chloride, allyl bromide, benzyl chloride, benzyl bromide, chloro-di-phenylmethane, bromo-di-phenylmethane, triphenylmethyl chloride, triphenylmethyl bromide, benzylidene chloride, benzylidene bromide, methyltrichlorosilane, phenyltrichlorosilane, dimethyldichlorosilane, diphenyldichlorosilane, trimethylchlorosilane (TMSCl), benzoyl chloride, benzoyl bromide, propionyl chloride, propionyl bromide, methyl chloroformate, methyl bromoformate, iodomethane, diiodomethane, triiodomethane (also referred to as "iodoform"), tetraiodomethane, 1-iodopropane, 2-iodopropane, 1,3-diiodopropane, t-butyl iodide, 2,2-dimethyl-1-iodopropane (also referred to as "neopentyl iodide"), allyl iodide, iodobenzene, benzyl iodide, diphenylmethyl iodide, triphenylmethyl iodide, benzylidene iodide (also referred to as "benzal iodide"), trimethylsilyl iodide, triethylsilyl iodide, triphenylsilyl iodide, dimethyldiiodosilane, diethyldiiodosilane, diphenyldiiodosilane, methyltriiodosilane, ethyltriiodosilane, phenyltriiodosilane, benzoyl iodide, propionyl iodide, methyl iodoformate, or the like.

According to an embodiment of the present invention, the nonmetal halide may include phosphorus trichloride, phosphorus tribromide, phosphorus pentachloride, phosphorus oxychloride, phosphorus oxybromide, boron trifluoride, boron trichloride, boron tribromide, silicon tetrafluoride, silicon tetrachloride (SiCl₄), silicon tetrabromide, arsenic trichloride, arsenic tribromide, selenium tetrachloride, selenium tetrabromide, tellurium tetrachloride, tellurium tetrabromide, silicon tetraiodide, arsenic triiodide, tellurium tetraiodide, boron triiodide, phosphorus triiodide, phosphorus oxyiodide or selenium tetraiodide.

According to an embodiment of the present invention, the metal halide may include tin tetrachloride, tin tetrabromide, aluminum trichloride, aluminum tribromide, antimony trichloride, antimony pentachloride, antimony tribromide, aluminum trifluoride, gallium trichloride, gallium tribromide, gallium trifluoride, indium trichloride, indium tribromide, indium trifluoride, titanium tetrachloride, titanium tetrabromide, zinc dichloride, zinc dibromide, zinc difluoride, aluminum triiodide, gallium triiodide, indium triiodide, titanium tetraiodide, zinc diiodide, germanium tetraiodide, tin tetraiodide, tin diiodide, antimony triiodide or magnesium diiodide.

According to an embodiment of the present invention, the organometal halide may be alkyl aluminum halide or alkyl aluminum sesquihalide. In a particular embodiment, the organometal halide may include dimethylaluminum chloride, diethylaluminum chloride, dimethylaluminum bromide, diethylaluminum bromide, dimethylaluminum fluoride, diethylaluminum fluoride, methylaluminum dichloride, ethylaluminum dichloride, methylaluminum dibromide, ethylaluminum dibromide, methylaluminum difluoride, ethylaluminum difluoride, methylaluminum sesquichloride, ethylaluminum sesquichloride (EASC), isobutylaluminum sesquichloride, methylmagnesium chloride, methylmagnesium bromide, ethylmagnesium chloride, ethylmagnesium bromide, n-butylmagnesium chloride, n-butylmagnesium bromide, phenylmagnesium chloride, phenylmagnesium bromide, benzylmagnesium chloride, trimethyltin chloride, trimethyltin bromide, triethyltin chloride, triethyltin bromide, di-t-butyltin dichloride, di-t-butyltin dibromide, di-n-butyltin dichloride, di-n-butyltin dibromide, tri-n-butyltin chloride, tri-n-butyltin bromide, methylmagnesium iodide, dimethylaluminum iodide, diethylaluminum iodide, di-n-butylaluminum iodide, diisobutylaluminum iodide, di-n-octylaluminum iodide, methylaluminum diiodide, ethylaluminum diiodide, n-butylaluminum diiodide, isobutylaluminum diiodide, methylaluminum sesquiiodide, ethylaluminum sesquiiodide, isobutylaluminum sesquiiodide, ethylmagnesium iodide, n-butylmagnesium iodide, isobutylmagnesium iodide, phenylmagnesium iodide, benzylmagnesium iodide, trimethyltin iodide, triethyltin iodide, tri-n-butyltin iodide, di-n-butyltin diiodide, di-t-butyltin diiodide, or the like.

According to an embodiment of the present invention, the halogen compound may be one or more selected from the group consisting of an alkyl aluminum halide represented by Formula 3 and an alkyl aluminum sesquihalide represented by Formula 4, in view of improving catalyst activity and resulting reactivity.

[Formula 3] AlR⁷R⁸R⁹

In Formula 3, R⁷ to R⁹ may be each independently a halogen group or an alkyl group of 1 to 12 carbon atoms, where R⁷ to R⁹ may not be all halogen groups. In a particular embodiment, in Formula 3, R⁷ to R⁹ may be each independently a halogen group or an alkyl group of 1 to 6 carbon atoms, where R⁷ to R⁹ may not be all halogen groups. In a more particular embodiment, in Formula 3, R⁷ and R⁸ may be each independently an alkyl group of 1 to 4 carbon atoms, and R⁹ may be a halogen group.

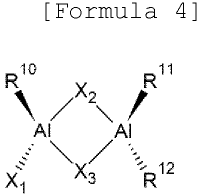

In Formula 4, R¹⁰ to R¹² may be each independently an alkyl group of 1 to 12 carbon atoms, and X₁ to X₃ may be each independently a halogen group. In a particular embodiment, in Formula 4, R¹⁰ to R¹² may be each independently an alkyl group of 1 to 6 carbon atoms. In a more particular embodiment, in Formula 4, R¹⁰ to R¹² may be each independently an alkyl group of 1 to 4 carbon atoms.

According to an embodiment of the present invention, the halogen compound may be one or more selected from the group consisting of a dialkyl aluminum halide and an alkyl aluminum sesquihalide in view of controlling the catalyst reaction and side reactions with regard to the lanthanide rare earth element compound of which hydrogen bond, oligomer type or combination thereof is pre-treated in the step (S10), and the types of the dialkyl aluminum halide and the alkyl aluminum sesquihalide are the same as described above. In a particular embodiment, the dialkyl aluminum halide may be diethyl aluminum chloride, and the alkyl aluminum sesquihalide may be ethyl aluminum sesquichloride.

According to an embodiment of the present invention, the step (S30) may be performed by injecting the halogen compound in 0.1 mol or more, 0.5 mol or more, 1.0 mol or more, 1.5 mol or more, 2.0 mol or more, 2.5 mol or more, or 3.0 mol or more, or by injecting 5.0 mol or less, 4.5 mol or less, 4.0 mol or less, 3.5 mol or less, or 3.0 mol or less with respect to 1 mol of the lanthanide rare earth element compound of which hydrogen bond, oligomer type or combination thereof is pre-treated in the step (S10).

According to an embodiment of the present invention, the step (S30) may be performed at a temperature of -20°C or more, -15°C or more, or -10°C or more, and at a temperature of 40°C or less, 35°C or less, 30°C or less, 25°C or less, or 20°C or less.

According to an embodiment of the present invention, the step (S30) may be performed for 10 minutes or more, 15 minutes or more, 20 minutes or more, 25 minutes or more, or 30 minutes or more, and 1 hour or less, 50 minutes or less, 40 minutes or less, or 30 minutes or less.

According to an embodiment of the present invention, by controlling the molar ratio, reaction temperature and reaction time of the lanthanide rare earth element compound of which hydrogen bond, oligomer type or combination thereof is pre-treated in the step (S10) with the alkylating agent, the catalyst activity may be improved even further in the step (S30) .

According to an embodiment of the present invention, the step (S10) to the step (S30) may be performed in an organic solvent. The organic solvent may be a nonpolar solvent having no reactivity with the constituent components of the catalyst composition. In a particular embodiment, the organic solvent may be linear, branched or cyclic aliphatic hydrocarbon of 5 to 20 carbon atoms such as n-pentane, n-hexane, n-heptane, n-octane, n-nonane, n-decane, isopentane, isohexane, isopentane, isooctane, 2,2-dimethylbutane, cyclopentane, cyclohexane, methylcyclopentane and methylcyclohexane; a mixture solvent of aliphatic hydrocarbon of 5 to 20 carbon atoms, such as petroleum ether, petroleum spirits, and kerosene; or an aromatic hydrocarbon-based solvent such as benzene, toluene, ethylbenzene, and xylene. In a more particular embodiment, the organic solvent may be the linear, branched or cyclic aliphatic hydrocarbon of 5 to 20 carbon atoms, or the mixture solvent of the aliphatic hydrocarbon, and preferably, n-hexane, cyclohexane, or a mixture thereof may be used.

According to an embodiment of the present invention, the step (S10), the step (S20) and the step (S30) may be performed in each of the reactors connected in series. Accordingly, in order to prepare the catalyst according to the method for preparing a catalyst composition, total four or more reactors including one or more reactors for performing the step (S10), two or more reactors for performing the step (S20), and one or more reactors for performing the step (S30), are required.

According to an embodiment of the present invention, the step (S10), the step (S20) and the step (S30) may be continuously performed. That is, the step (S10), the step (S20) and the step (S30) may be continuously performed in each of the reactors connected in series. In this case, the productivity of the catalyst composition and the conjugated diene-based polymer using the same may be improved, and more uniform quality may be secured.

According to an embodiment of the present invention, the total steps of the method for preparing the catalyst composition including the step (S10) to the step (S30) may be performed at a temperature of -20°C or more, -15°C or more, - 10°C or more, or -5°C or more, and at a temperature of 40°C or less, 35°C or less, 30°C or less, 25°C or less, 20°C or less, or 15°C or less.

According to an embodiment of the present invention, the total steps of the method for preparing the catalyst composition including the step (S10) to the step (S30) may be performed for 30 minutes or more, 35 minutes or more, 40 minutes or more, 45 minutes or more, 50 minutes or more, 55 minutes or more, 60 minutes or more, 65 minutes or more, or 70 minutes or more, and 2 hours or less, 1 hour and 50 minutes or less, 1 hour and 40 minutes or less, 1 hour and 30 minutes or less, 1 hour and 20 minutes or less, or 1 hour and 10 minutes or less.

### Method for preparing conjugated diene-based polymer

The present invention provides a method for preparing a conjugated diene-based polymer.

According to an embodiment of the present invention, the method for preparing the conjugated diene-based polymer may include a step or polymerizing a conjugated diene-based monomer in the presence of the catalyst composition prepared by the method for preparing a catalyst composition, in a hydrocarbon solvent to prepare an active polymer (S100).

According to an embodiment of the present invention, the conjugated diene-based monomer injectable in the step (S100) may be one or more selected from the group consisting of 1,3-butadiene, isoprene, 1,3-pentadiene, 1,3-hexadiene, 2,3-dimethyl-1,3-butadiene, 2-ethyl-1,3-butadiene, 2-methyl-1,3-pentadiene, 3-methyl-1,3-pentadiene, 4-methyl-1,3-pentadiene, 2,4-hexadiene, or the like.

According to an embodiment of the present invention, the hydrocarbon solvent in the step (S100) may be one or more selected from the group consisting of n-pentane, n-hexane, n-heptane, isooctane, cyclohexane, toluene, benzene and xylene.

According to an embodiment of the present invention, the catalyst composition may be a catalyst composition prepared by the above-described method for preparing a catalyst composition, and the catalyst composition may use a neodymium compound in an amount of 0.03 mmol or more, 0.04 mmol or more, 0.05 mmol or more, or 0.06 mmol or more, and in an amount of 0.15 mmol or less, 0.14 mmol or less, 0.13 mmol or less, 0.12 mmol or less, 0.11 mmol or less, 0.10 mmol or less, 0.09 mmol or less, or 0.08 mmol or less with respect to total 100 g of the conjugated diene-based monomer.

According to an embodiment of the present invention, the polymerization in the step (S100) may be performed by continuous polymerization in a polymerization reactor including at least two reactors or in a batch type reactor. In addition, the polymerization may be polymerization with heating, isothermal polymerization, or polymerization at a constant temperature (adiabatic polymerization).

According to an embodiment of the present invention, the polymerization at a constant temperature may mean polymerization using self-generated heat of reaction without arbitrarily applying heat after injecting a catalyst composition, and the polymerization with heating may mean injecting a catalyst composition and then, increasing the temperature by arbitrarily applying heat. The isothermal polymerization may mean keeping the temperature of the reactants constant by increasing heat by applying heat or taking heat after adding a catalyst composition.

According to an embodiment of the present invention, the polymerization in the step (S100) may be performed by coordination anion polymerization, and polymerization environment may be bulk polymerization, solution polymerization, suspension polymerization or emulsion polymerization, particularly, solution polymerization.

According to an embodiment of the present invention, the polymerization in the step (S100) may be performed at a temperature of -20°C or more, -10°C or more, 0°C or more, 10°C or more, 20°C or more, 30°C or more, 40°C or more, 50°C or more, or 60°C or more, and 200°C or less, 150°C or less, 120°C or less, or 90°C or less. Within this range, the polymerization reaction may be controlled smooth, and the cis-1,4 bond content of the conjugated diene-based polymer thus produced may be secured.

According to an embodiment of the present invention, the polymerization of the step (S100) may be performed for 15 minutes or more, 20 minutes or more, 30 minutes or more, 40 minutes or more, 50 minutes or more, or 1 hour or more, and 3 hours or less, 2 hour and 30 minutes or less, or 2 hours or less.

According to an embodiment of the present invention, the conjugated diene-based polymer formed by the polymerization of the step (S100) may be an active polymer including an activated moiety by the catalyst composition.

According to an embodiment of the present invention, a step of reacting the active polymer with a modifier (S200) may be included. The modifier may be a known modifier that may be used during preparing a conjugated diene-based polymer using a catalyst composition including a lanthanide rare earth element compound.

According to an embodiment of the present invention, the method for preparing a conjugated diene-based polymer may include after preparing the active polymer, a step of finishing the polymerization by further using an additive such as a reaction quenching agent for finishing polymerization reaction, such as polyoxyethylene glycol phosphate, and an antioxidant such as 2,6-di-t-butylparacresol. In addition, additives generally serving easy solution polymerization, for example, additives such as a chelating agent, a dispersant, a pH controlling agent, a deoxidizer, and an oxygen scavenger may be selectively further used together with the reaction quenching agent.

### Conjugated diene-based polymer

The present invention provides a conjugated diene-based polymer.

According to an embodiment of the present invention, the conjugated diene-based polymer may be prepared by the method for preparing a conjugated diene-based polymer. That is, the conjugated diene-based polymer may be polymerized in the presence of the catalyst composition prepared by the above-described method for preparing a catalyst composition.

According to an embodiment of the present invention, the conjugated diene-based polymer may include a conjugated diene-based monomer unit. The conjugated diene-based monomer unit means a repeating unit formed by the polymerization of the conjugated diene-based monomer.

According to an embodiment of the present invention, the conjugated diene-based polymer may include 1,3-butadiene monomer unit in 80 wt% or more, 85 wt% or more, 90 wt% or more, 95 wt% or more, or 100 wt%, and selectively, 20 wt% or less, 15 wt% or less, 10 wt% or less, or 5 wt% or less of other conjugated diene-based monomers which are copolymerizable with 1,3-butadiene, and within the range, effects of preventing the reduction of the 1,4-cis bond content in a conjugated diene-based polymer may be achieved. The 1,3-butadiene monomer may be 1,3-butadiene or the derivatives thereof, including 1,3-butadiene, 2,3-dimethyl-1,3-butadiene, and 2-ethyl-1,3-butadiene, and as the other conjugated diene-based monomers which are copolymerizable with 1,3-butadiene, 2-methyl-1,3-pentadiene, 1,3-pentadiene, 3-methyl-1,3-pentadiene, 4-methyl-1,3-pentadiene, 1,3-hexadiene or 2,4-hexadiene may be used.

According to an embodiment of the present invention, the conjugated diene-based polymer may be a conjugated diene-based polymer catalyzed from a catalyst composition including a lanthanide rare earth element compound. That is, the conjugated diene-based polymer may be a conjugated diene-based polymer including an organometal moiety activated from a catalyst composition including a neodymium compound.

According to an embodiment of the present invention, the conjugated diene-based polymer may have a weight average molecular weight (Mw) of 1.0 × 10⁵ g/mol or more, 2.0 × 10⁵ g/mol or more, 3.0 × 10⁵ g/mol or more, 4.0 × 10⁵ g/mol or more, 5.0 × 10⁵ g/mol or more, 6.0 × 10⁵ g/mol or more, 7.0 × 10⁵ g/mol or more, 8.0 × 10⁵ g/mol or more, or 9.0 × 10⁵ g/mol or more, and 1.0 × 10⁶ g/mol or less, 9.0 × 10⁵ g/mol or less, 8.0 × 10⁵ g/mol or less, 7.0 × 10⁵ g/mol or less, 6.0 × 10⁵ g/mol or less, 5.0 × 10⁵ g/mol or less, 4.0 × 10⁵ g/mol or less, or 3.0 × 10⁵ g/mol or less. In addition, the conjugated diene-based polymer may have a number average molecular weight (Mn) of 1.0 × 10⁵ g/mol or more, 2.0 × 10⁵ g/mol or more, 3.0 × 10⁵ g/mol or more, 4.0 × 10⁵ g/mol or more, or 5.0 × 10⁵ g/mol or more, and 6.0 × 10⁵ g/mol or less, 5.0 × 10⁵ g/mol or less, 4.0 × 10⁵ g/mol or less, 3.0 × 10⁵ g/mol or less, 2.0 × 10⁵ g/mol or less, or 1.0 × 10⁵ g/mol or less. Within this range, if applied to a rubber composition, tensile properties are excellent, processability is excellent, and workability of a rubber composition is improved for easy mixing and kneading, and accordingly, excellent effects of the mechanical properties and the balance of physical properties of the rubber composition may be achieved.

According to an embodiment of the present invention, the conjugated diene-based polymer may have molecular weight distribution (Mw/Mn) of 1.0 or more, 1.5 or more, 2.0 or more, 2.1 or more, 2.2 or more, or 2.3 or more, and 4.0 or less, 3.5 or less, 3.0 or less, or 2.5 or less. The molecular weight distribution may be calculated from the ratio (Mw/Mn) of the weight average molecular weight (Mw) and the number average molecular weight (Mn). In this case, the number average molecular weight (Mn) is a common average of the molecular weights of individual polymers, which is obtained by measuring the molecular weights of n polymer chains, obtaining the total of the molecular weights, and dividing the total by n, and the weight average molecular weight (Mw) represents a polydispersity of a polymer composition. In addition, each of the weight average molecular weight and the number average molecular weight may mean a polystyrene converted molecular weight, analyzed by gel permeation chromatography (GPC).

According to an embodiment of the present invention, if the conjugated diene-based polymer satisfies the weight average molecular weight (Mn) and the number average molecular weight conditions simultaneously together with the molecular weight distribution, and if applied to a rubber composition, tensile properties, viscoelasticity and processability on the rubber composition may be excellent, and excellent effects of the balance among physical properties may be achieved.

According to an embodiment of the present invention, the conjugated diene-based polymer may have the cis-1,4 bond content of 97.0 wt% or more, 97.5 wt% or more, 97.6 wt% or more, 97.9 wt% or more, 98.0 wt% or more, or 98.4 wt% or more, and 100.0 wt% or less, 99.5 wt% or less, or 99.0 wt% or less.

According to an embodiment of the present invention, the conjugated diene-based polymer may have a mooney viscosity (ML1+4, @100°C) of 30 or more, 35 or more, 40 or more, 41 or more, 43 or more, or 44 or more, and 70 or less, 60 or less, 50 or less, 49 or less, or 45 or less.

### Rubber composition

The present invention provides a rubber composition.

According to an embodiment of the present invention, the rubber composition may include the conjugated diene-based polymer. In a particular embodiment, the rubber composition may include the conjugated diene-based polymer in an amount of 0.1 wt% or more, 10 wt% or more, or 20 wt% or more, and 100 wt% or less, 95 wt% or less, or 90 wt% or less. Within this range, the abrasion resistance and crack resistance of a molded product manufactured using the rubber composition, for example, a tire, may be sufficiently secured.

According to an embodiment of the present invention, the rubber composition may further include other rubber components in addition to the conjugated diene-based polymer, as necessary. In this case, the rubber components may be included in an amount of 90 wt% or less with respect to the total weight of the rubber composition. Particularly, the rubber components may be included in an amount of 1 part by weight to 900 parts by weight with respect to 100 parts by weight of the conjugated diene-based copolymer.

According to an embodiment of the present invention, the rubber component may be a natural rubber or a synthetic rubber, for example, a natural rubber (NR) including cis-1,4-polyisoprene; a modified natural rubber which is obtained by modifying or purifying a common natural rubber, such as an epoxidized natural rubber (ENR), a deproteinized natural rubber (DPNR), and a hydrogenated natural rubber; and a synthetic rubber such as a styrene-butadiene copolymer (SBR), a polybutadiene (BR), a polyisoprene (IR), a butyl rubber (IIR), an ethylene-propylene copolymer, a polyisobutylene-co-isoprene, a neoprene, a poly(ethylene-co-propylene), a poly(styrene-co-butadiene), a poly(styrene-co-isoprene), a poly(styrene-co-isoprene-co-butadiene), a poly(isoprene-co-butadiene), a poly(ethylene-co-propylene-co-diene), a polysulfide rubber, an acryl rubber, a urethane rubber, a silicone rubber, an epichlorohydrin rubber, and a halogenated butyl rubber, and any one or a mixture of two or more thereof may be used.

According to an embodiment of the present invention, the rubber composition may include 20 parts by weight to 90 parts by weight of a filler with respect to 100 parts by weight of the conjugated diene-based polymer, and the filler may be a silica-based filler, a carbon black-based filler or a combination thereof. Particularly, the filler may be a carbon black-based filler.

According to an embodiment of the present invention, the carbon black-based filler may have a nitrogen adsorption specific surface area of 20 m²/g to 250 m²/g (measured based on N2SA, JIS K 6217-2:2001). Within this range, the processability of the rubber composition may be excellent, and reinforcing performance by the filler may be sufficiently secured. In addition, the carbon black-based filler may have a dibutylphthalate oil absorption amount (DBP) of 80 cc/100 g to 200 cc/100 g. Within this range, the processability of the rubber composition may be excellent, and reinforcing performance by the filler may be sufficiently secured.

According to an embodiment of the present invention, the silica-based filler may include wet silica (hydrated silica), dry silica (anhydrous silicate), calcium silicate, aluminum silicate or colloid silica. Particularly, the silica-based filler may be wet silica which has the most remarkable compatibility effect of the improving effect of destruction characteristics and wet grip. In addition, the silica-based filler may have nitrogen absorption specific surface area (nitrogen surface area per gram, N2SA) of 120 m²/g to 180 m²/g, and cetyl trimethyl ammonium bromide (CTAB) absorption specific surface area of 100 m²/g to 200 m²/g. Within this range, the processability of the rubber composition may be excellent, and reinforcing performance by the filler may be sufficiently secured.

According to an embodiment of the present invention, if the silica-based filler is used as the filler, a silane coupling agent may be used together for the improvement of reinforcing and low exothermic properties. The silane coupling agent may include bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropylbenzothiazolyltetrasulfide, 3-triethoxysilylpropylbenzolyltetrasulfide, 3-triethoxysilylpropylmethacrylatemonosulfide, 3-trimethoxysilylpropylmethacrylatemonosulfide, bis(3-diethoxymethylsilylpropyl)tetrasulfide, 3-mercaptopropyldimethoxymethylsilane, dimethoxymethylsilylpropyl-N,N-dimethylthiocarbamoyltetrasulfide, or dimethoxymethylsilylpropylbenzothiazolyltetrasulfide. In a particular embodiment, the silane coupling agent may be bis(3-triethoxysilylpropyl)polysulfide or 3-trimethoxysilylpropylbenzothiazyltetrasulfide in consideration of the improving effect of reinforcing properties.

According to an embodiment of the present invention, the rubber composition may be sulfur crosslinkable, and so may further include a vulcanizing agent. The vulcanizing agent may particularly be a sulfur powder and may be included in an amount of 0.1 parts by weight to 10 parts by weight with respect to 100 parts by weight of the rubber component. Within this range, elasticity and strength required for a vulcanized rubber composition may be secured, and at the same time, a low fuel consumption ratio may be attained.

According to an embodiment of the present invention, the rubber composition may further include various additives used in a common rubber industry in addition to the above components, particularly, a vulcanization accelerator, a process oil, a plasticizer, an antiaging agent, a scorch preventing agent, a zinc white, stearic acid, a thermosetting resin, a thermoplastic resin, or the like.

According to an embodiment of the present invention, the vulcanization accelerator is not specifically limited, and may particularly include thiazole-based compounds such as 2-mercaptobenzothiazole (M), dibenzothiazyldisulfide (DM), and N-cyclohexyl-2-benzothiazylsulfenamide (CZ), or guanidine-based compounds such as diphenylguanidine (DPG). The vulcanization accelerator may be included in an amount of 0.1 parts by weight to 5 parts by weight with respect to 100 parts by weight of the rubber component.

According to an embodiment of the present invention, the process oil acts as a softener in a rubber composition and may particularly include a paraffin-based, naphthene-based, or aromatic compound. More particularly, an aromatic process oil may be used in consideration of tensile strength and abrasion resistance, and a naphthene-based or paraffin-based process oil may be used in consideration of hysteresis loss and properties at low temperature. The process oil may be included in an amount of 100 parts by weight or less with respect to 100 parts by weight of the rubber component. Within this range, the deterioration of the tensile strength and low exothermic properties (low fuel consumption ratio) of a vulcanized rubber may be prevented.

According to an embodiment of the present invention, the antiaging agent may include N-isopropyl-N'-phenyl-p-phenylenediamine, N-(1,3-dimethylbutyl)-N'-phenyl-p-phenylenediamine, 6-ethoxy-2,2,4-trimethyl-1,2-dihydroquinoline, or a condensate of diphenylamine and acetone at a high temperature. The antiaging agent may be used in an amount of 0.1 parts by weight to 6 parts by weight with respect to 100 parts by weight of the rubber component.

According to an embodiment of the present invention, the rubber composition may be obtained by mulling using a mulling apparatus such as a banbury mixer, a roll, and an internal mixer according to a mixing prescription. In addition, a rubber composition having low exothermic properties and excellent abrasion resistance may be obtained by a vulcanization process after a molding process.

According to an embodiment of the present invention, the rubber composition may be useful to the manufacture of each member of a tire such as a tire tread, an under tread, a side wall, a carcass coating rubber, a belt coating rubber, a bead filler, a chafer, and a bead coating rubber, or to the manufacture of rubber products in various industries such as a vibration-proof rubber, a belt conveyor, and a hose. In a particular embodiment, the molded product manufactured using the rubber composition may include tire or tire tread.

Hereinafter, embodiments of the present invention will be explained in detail so that a person skilled in the art may easily perform. However, embodiments according to the present invention may be modified in various other types, and should not be limited to the embodiments described below.

### Examples

### Example 1

Four pressure-resistant reactors having a volume of 300 ml and equipped with a jacket and a stirrer were connected in series and used as continuous preparation reactors of a catalyst. In this case, the third reactor and the fourth reactor were connected using a pipe equipped with a line mixer. Each reactor maintained a nitrogen atmosphere. To the first reactor, a neodymium versatate solution diluted in n-hexane was continuously injected, and at the same time, 1,3-butadiene diluted in n-hexane was continuously injected, and a triethyl aluminum solution diluted in n-hexane was continuously injected in an amount of 10 mol of the triethyl aluminum in contrast to 1 mol of neodymium. The first reactor was operated at a temperature of 0°C, and after 10 minutes from the continuous injection, a mixture mixed in the first reactor was transported to the second reactor. To the second reactor, a diisobutyl aluminum hydride solution diluted in n-hexane was continuously injected in an amount of 15 mol of the diisobutyl aluminum hydride in contrast to 1 mol of neodymium. The second reactor was operated at a temperature of 10°C, and after 20 minutes from the continuous injection, the reaction product in the second reactor was transported to the third reactor. The third reactor was operated at a temperature of 10°C, and after 10 minutes from the continuous injection, the reaction product in the third reactor was transported to the fourth reactor. To the fourth reactor, a diethyl aluminum chloride solution diluted in n-hexane was continuously injected in an amount of 3 mol of the diethyl aluminum chloride in contrast to 1 mol of neodymium. The third reactor was operated at a temperature of -5°C, and after 30 minutes from the continuous injection, the catalyst composition thus prepared was separately taken and stored in a pressure-resistant reactor prepared with a nitrogen atmosphere at a temperature of 0°C or less.

### Example 2

Four pressure-resistant reactors having a volume of 300 ml and equipped with a jacket and a stirrer were connected in series and used as continuous preparation reactors of a catalyst. In this case, the third reactor and the fourth reactor were connected using a pipe equipped with a line mixer. Each reactor maintained a nitrogen atmosphere. To the first reactor, a neodymium versatate solution diluted in n-hexane was continuously injected, and at the same time, 1,3-butadiene diluted in n-hexane was continuously injected, and a triethyl aluminum solution diluted in n-hexane was continuously injected in an amount of 10 mol of the triethyl aluminum in contrast to 1 mol of neodymium. The first reactor was operated at a temperature of 0°C, and after 10 minutes from the continuous injection, a mixture mixed in the first reactor was transported to the second reactor. To the second reactor, a diisobutyl aluminum hydride solution diluted in n-hexane was continuously injected in an amount of 15 mol of the diisobutyl aluminum hydride in contrast to 1 mol of neodymium. The second reactor was operated at a temperature of 10°C, and after 15 minutes from the continuous injection, the reaction product in the second reactor was transported to the third reactor. The third reactor was operated at a temperature of 10°C, and after 15 minutes from the continuous injection, the reaction product in the third reactor was transported to the fourth reactor. To the fourth reactor, a diethyl aluminum chloride solution diluted in n-hexane was continuously injected in an amount of 3 mol of the diethyl aluminum chloride in contrast to 1 mol of neodymium. The third reactor was operated at a temperature of -5°C, and after 30 minutes from the continuous injection, the catalyst composition thus prepared was separately taken and stored in a pressure-resistant reactor prepared with a nitrogen atmosphere at a temperature of 0°C or less.

### Example 3

Four pressure-resistant reactors having a volume of 300 ml and equipped with a jacket and a stirrer were connected in series and used as continuous preparation reactors of a catalyst. In this case, the third reactor and the fourth reactor were connected using a pipe equipped with a line mixer. Each reactor maintained a nitrogen atmosphere. To the first reactor, a neodymium versatate solution diluted in n-hexane was continuously injected, and at the same time, 1,3-butadiene diluted in n-hexane was continuously injected, and a triethyl aluminum solution diluted in n-hexane was continuously injected in an amount of 10 mol of the triethyl aluminum in contrast to 1 mol of neodymium. The first reactor was operated at a temperature of 0°C, and after 10 minutes from the continuous injection, a mixture mixed in the first reactor was transported to the second reactor. To the second reactor, a diisobutyl aluminum hydride solution diluted in n-hexane was continuously injected in an amount of 15 mol of the diisobutyl aluminum hydride in contrast to 1 mol of neodymium. The second reactor was operated at a temperature of 10°C, and after 10 minutes from the continuous injection, the reaction product in the second reactor was transported to the third reactor. The third reactor was operated at a temperature of 10°C, and after 10 minutes from the continuous injection, the reaction product in the third reactor remained in the pipe equipped with a line mixer at 10°C for 10 minutes and then, was transported to the fourth reactor. To the fourth reactor, a diethyl aluminum chloride solution diluted in n-hexane was continuously injected in an amount of 3 mol of the diethyl aluminum chloride in contrast to 1 mol of neodymium. The third reactor was operated at a temperature of -5°C, and after 30 minutes from the continuous injection, the catalyst composition thus prepared was separately taken and stored in a pressure-resistant reactor prepared with a nitrogen atmosphere at a temperature of 0°C or less.

### Example 4

Four pressure-resistant reactors having a volume of 300 ml and equipped with a jacket and a stirrer were connected in series and used as continuous preparation reactors of a catalyst. In this case, the third reactor and the fourth reactor were connected using a pipe equipped with a line mixer. Each reactor maintained a nitrogen atmosphere. To the first reactor, a neodymium versatate solution diluted in n-hexane was continuously injected, and at the same time, 1,3-butadiene diluted in n-hexane was continuously injected, and a triethyl aluminum solution diluted in n-hexane was continuously injected in an amount of 10 mol of the triethyl aluminum in contrast to 1 mol of neodymium. The first reactor was operated at a temperature of 0°C, and after 10 minutes from the continuous injection, a mixture mixed in the first reactor was transported to the second reactor. To the second reactor, a diisobutyl aluminum hydride solution diluted in n-hexane was continuously injected in an amount of 15 mol of the diisobutyl aluminum hydride in contrast to 1 mol of neodymium. The second reactor was operated at a temperature of 0°C, and after 30 minutes from the continuous injection, the reaction product in the second reactor was transported to the third reactor. The third reactor was operated at a temperature of 10°C, and after 15 minutes from the continuous injection, the reaction product in the third reactor remained in the pipe equipped with a line mixer at 10°C for 10 minutes and then, was transported to the fourth reactor. To the fourth reactor, a diethyl aluminum chloride solution diluted in n-hexane was continuously injected in an amount of 3 mol of the diethyl aluminum chloride in contrast to 1 mol of neodymium. The third reactor was operated at a temperature of -5°C, and after 30 minutes from the continuous injection, the catalyst composition thus prepared was separately taken and stored in a pressure-resistant reactor prepared with a nitrogen atmosphere at a temperature of 0°C or less.

### Comparative Example 1

Two pressure-resistant reactors having a volume of 300 ml and equipped with a jacket and a stirrer were connected in series and used as continuous preparation reactors of a catalyst. Each reactor maintained a nitrogen atmosphere. To the first reactor, a neodymium versatate solution diluted in n-hexane was continuously injected, and at the same time, 1,3-butadiene diluted in n-hexane was continuously injected, and a diisobutyl aluminum hydride solution diluted in n-hexane was continuously injected in an amount of 15 mol of the diisobutyl aluminum hydride in contrast to 1 mol of neodymium. The first reactor was operated at a temperature of 0°C, and after 30 minutes from the continuous injection, the reaction product in the first reactor was transported to the second reactor. To the second reactor, a diethyl aluminum chloride solution diluted in n-hexane was continuously injected in an amount of 3 mol of the diethyl aluminum chloride in contrast to 1 mol of neodymium. The second reactor was operated at a temperature of -5°C, and after 30 minutes from the continuous injection, the catalyst composition thus prepared was separately taken and stored in a pressure-resistant reactor prepared with a nitrogen atmosphere at a temperature of 0°C or less.

### Comparative Example 2

To a reactor, 1,3-butadiene diluted in n-hexane was injected, and neodymium versatate (Solvay Co.) was injected. Then, diisobutyl aluminum hydride was injected into the reactor in an amount of 15 mol of the diisobutyl aluminum hydride in contrast to 1 mol of neodymium at a temperature of 0°C, followed by stirring for 30 minutes. Then, diethyl aluminum chloride was injected into the reactor in an amount of 3 mol of the diethyl aluminum chloride in contrast to 1 mol of neodymium at a temperature of -5°C, followed by stirring for 30 minutes to prepare a catalyst composition.

### Comparative Example 3

To a reactor, 1,3-butadiene diluted in n-hexane was injected, and neodymium versatate (Solvay Co.) was injected. Then, triisobutyl aluminum was injected into the reactor in an amount of 30 mol of the triisobutyl aluminum in contrast to 1 mol of neodymium at a temperature of 0°C, followed by stirring for 30 minutes. Then, diethyl aluminum chloride was injected into the reactor in an amount of 3 mol of the diethyl aluminum chloride in contrast to 1 mol of neodymium at a temperature of -5°C, followed by stirring for 30 minutes to prepare a catalyst composition.

### Experimental Examples

### Experimental Example 1: Preparation of conjugated diene-based polymer and evaluation of catalyst composition activity

To a 20 L, autoclave reactor, 500 g of 1,3-butadiene and 4.2 kg of n-hexane were injected, and the internal temperature of the reactor was raised to 70°C. To the reactor, if the catalyst compositions prepared in Examples 1 to 4 were used, 0.01 g of diisobutyl aluminum hydride as a molecular weight adjusting agent, or if the catalyst compositions prepared in Comparative Examples 1 to 3 were used, 0.25 g of diisobutyl aluminum hydride as a molecular weight adjusting agent, was added, and then, each of the catalyst compositions prepared in Examples 1 to 4 and Comparative Examples 1 to 3 was injected, followed by polymerizing. At a point where a polymerization conversion ratio reached 98% or more, a n-hexane solution including 1.0 g of a polymerization inhibitor and a n-hexane solution in which 30 wt% of Irganox 1520 antioxidant (BASF) was dissolved were added to quench the reaction, and the polymer thus obtained was put in hot water heated with steam and stirred to remove the solvent. The resultant was roll-dried to remove remaining solvent and water to prepare a butadiene polymer.

During preparing the butadiene polymer, a portion of a polymerization solution was taken after 25 minutes of the reaction time from the initiation point of polymerization, the total solid content (TSC, %) was measured, and a polymerization conversion ratio was calculated according to Mathematical Equation 1 below. The polymerization conversion ratio after 25 minutes of the reaction time was measured for each of the catalyst compositions of Examples 1 to 4 and Comparative Examples 1 to 3, and catalyst composition activity was evaluated and shown in Table 1. Based on the measurement value of Comparative Example 2 as a reference value, the catalyst composition activities for the Examples and Comparative Examples were indexed using Mathematical Equation 2. Polymerization conversion ratio (%) = TSC of sample (%)/concentration of 1,3-butadiene injected (wt%) Activity index = (measurement value/reference value) x 100

**[Table 1]**

| Division | Examp le 1 | Examp le 2 | Examp le 3 | Examp le 4 | Compa rativ e Examp le 1 | Compa rativ e Examp le 2 | Compa rativ e Examp le 3 |
|---|---|---|---|---|---|---|---|
| Activity (25 minute polymerizatio n conversion ratio, %) | 88 | 86 | 87 | 85 | 57 | 55 | 45 |
| Activity index (%) | 160 | 156 | 158 | 155 | 104 | 100 | 82 |

As shown in Table 1, the catalyst compositions prepared in Examples 1 to 4 showed very high activity of the catalyst compositions in contrast to Comparative Examples 1 and 3.

In contrast, in Comparative Example 1 not performing a pre-treatment step using triethyl aluminum with respect to a lanthanide rare earth element compound according to the present invention, it could be confirmed that the activity of the catalyst composition was degraded in contrast to Examples 1 to 4 using the same alkylating agent and halogen compound.

In addition, in Comparative Example 2 not performing a pre-treatment step using triethyl aluminum with respect to a lanthanide rare earth element compound according to the present invention and preparing a catalyst composition using a batch type reactor, it could be confirmed that the activity of the catalyst composition was degraded in contrast to Examples 1 to 4 using the same alkylating agent and halogen compound.

In addition, in Comparative Example 3 not performing a pre-treatment step using triethyl aluminum with respect to a lanthanide rare earth element compound according to the present invention and preparing a catalyst composition using a batch type reactor, though changing the alkylating agent into triisobutyl aluminum and using an excessive amount thereof, it could be confirmed that the alkylation was insufficiently performed and the activity of the catalyst composition was degraded in contrast to Examples 1 to 4.

### Experimental Example 2: Evaluation of physical properties of conjugated diene-based polymer

For the conjugated diene-based polymers prepared in Experimental Example 1 using the catalyst compositions of Examples 1 to 4 and Comparative Examples 1 to 3, mooney viscosity, molecular weight distribution and the cis-1,4 bond content were measured and shown in Table 2 below.
* Mooney viscosity (ML1+4, @100°C): Mooney viscosity was measured using Large Rotor of MV2000E of Monsanto Co., at a rotor speed of 2 ± 0.02 rpm at 100°C, for each polymer. In this case, a specimen used was stood at room temperature (23 ± 3°C) for 30 minutes or more, 27 ± 3 g of the specimen was taken and put in a die cavity, and measurement was conducted while applying torque by operating a platen.
* Weight average molecular weight (Mw), number average molecular weight (Mn), and molecular weight distribution (MWD): Each polymer was dissolved in tetrahydrofuran (THF) under 40°C conditions for 30 minutes and loaded and flown on gel permeation chromatography (GPC). In this case, two columns of PLgel Olexis (product name) and one column of PLgel mixed-C of Polymer laboratories Co. were used in combination. In addition, newly replaced columns were all mixed bed type columns, and polystyrene was used as a GPC standard material.
* Cis-1,4 bond content: The cis-1,4 bond content of a conjugated diene moiety was measured by Fourier-transform infrared spectroscopy (FT-IR). Particularly, FT-IR transmission spectrum of the carbon disulfide solution of the conjugated diene-based polymer prepared in a concentration of 5 mg/mL was measured with carbon disulfide of the same cell as a blank, and each content was obtained using the maximum peak value around 1130 cm⁻¹ (a, base line), the minimum peak value around 967 cm⁻¹ showing a trans-1,4 bond (b), the minimum peak value around 911 cm⁻¹ showing a vinyl bond (c), and the minimum peak value around 736 cm⁻¹ showing a cis-1,4 bond (d) of the measured spectrum.

**[Table 2]**

| Division | Examp le 1 | Examp le 2 | Examp le 3 | Examp le 4 | Compa rativ e Examp le 1 | Compa rativ e Examp le 2 | Compa rativ e Examp le 3 |
|---|---|---|---|---|---|---|---|
| Mooney viscosity (MU) | 43 | 49 | 41 | 44 | 44 | 45 | 48 |
| Molecular weight distribution | 2.3 | 2.3 | 2.3 | 2.4 | 3.0 | 2.9 | 3.1 |
| Cis-1,4 bond content (wt%) | 97.6 | 98.0 | 98.4 | 97.9 | 97.5 | 97.5 | 97.1 |

As shown in Table 2, it could be confirmed that the conjugated diene-based polymers prepared using the catalyst compositions prepared in Examples 1 to 4 showed suitable levels of mooney viscosity and molecular weight distribution, while securing the high level of the cis-1,4 bond content.

On the contrary, the conjugated diene-based polymers prepared using the catalyst compositions prepared in Comparative Examples 1 to 3 showed degraded cis-1,4 bond content and increased molecular weight distribution in contrast to Examples 1, 2 and 4.

### Experimental Example 3: Evaluation of physical properties of rubber composition

By using the conjugated diene-based polymers prepared in Experimental Example 1 using the catalyst compositions of Examples 1 to 4 and Comparative Examples 1 to 3, rubber compositions and rubber specimens were prepared, and mooney viscosity, abrasion resistance, tensile properties and viscoelasticity properties were measured by the methods below and shown in Table 3 below.

### <Preparation of rubber compositions and rubber specimens>

With respect to 100 parts by weight of each of the conjugated diene-based polymers prepared in Experimental Example 1 using the catalyst compositions of Examples 1 to 4 and Comparative Examples 1 to 3, 70 parts by weight of carbon black, 22.5 parts by weight of a process oil (TDAE oil), 2 parts by weight of an antiaging agent (TMDQ), 3 parts by weight of zinc oxide (ZnO), and 2 parts by weight of stearic acid were mixed.

Then, to each rubber composition, 2 parts by weight of sulfur, 2 parts by weight of a vulcanization accelerator (CZ) and 0.5 parts by weight of a vulcanization accelerator (DPG) were added, and the resultant was gently mixed at 50°C for 1 minute and 30 seconds at 50 rpm, and a vulcanized mixture compound in a sheet shape was formed using a roll of 50°C. The vulcanized mixture compound was vulcanized at 160°C for 25 minutes to form a rubber specimen.
* Tensile properties: After vulcanizing each rubber composition prepared at 150°C for t90 minutes, based on ASTM D412, modulus when extended by 300% (M-300%, kg·f/cm²) of the vulcanized product was measured. 300% modulus of the Examples and Comparative Examples were indexed based on the measurement value of Comparative Example 2 as a reference value by using Mathematical Equation 3. M-300% index = (measurement value/reference value) x 100
* Viscoelasticity properties: The coefficient of viscoelasticity properties (tan δ) at -60°C to 60°C was measured using a DMTS 500N of GABO Co. (Germany) with a frequency of 10 Hz, prestrain 3%, and dynamic strain 3%. In this case, a tan δ value at 0°C represents skid resistance, and a tan δ value at 60°C represents rolling resistance (fuel consumption ratio). Viscoelasticity properties of the Examples and Comparative Examples were indexed based on the measurement value of Comparative Example 2 as a reference value by using Mathematical Equation 4. Tan δ 60°C Index = (reference value/measurement value) x 100
* Abrasion resistance: A DIN abrasion test was performed based on ASTM D5963 for each of the rubber specimens formed, and shown as a DIN wt loss index (loss volume index: abrasion resistance index (ARIA, Method A)). The abrasion resistances of the Examples and Comparative Examples were indexed based on the measurement value of Comparative Example 2 as a reference value by using Mathematical Equation 5. Abrasion amount index = (reference value/measurement value) x 100

**[Table 3]**

| Division | | Exam ple 1 | Exam ple 2 | Exam ple 3 | Exam ple 4 | Comp arat ive Exam ple 1 | Comp arat ive Exam ple 2 | Comp arat ive Exam ple 3 |
|---|---|---|---|---|---|---|---|---|
| Tensi le prope rties | M-300% (kg·f/cm² ) | 88 | 91 | 86 | 87 | 79 | 80 | 81 |
| | M-300% index (%) | 110 | 114 | 108 | 109 | 99 | 100 | 101 |
| Visco elast icity prope rties | Tan δ 60°C | 0.15 8 | 0.15 4 | 0.16 0 | 0.15 7 | 0.17 4 | 0.17 1 | 0.16 8 |
| | Tan δ 60°C index (%) | 108 | 111 | 107 | 109 | 98 | 100 | 102 |
| Abras ion resis tance | Abrasion amount (mg) | 19.7 | 19.1 | 20.4 | 20.1 | 22.1 | 21.5 | 21.0 |
| | Abrasion amount index (%) | 109 | 113 | 105 | 107 | 97 | 100 | 102 |

As shown in Table 3, it could be confirmed that the rubber compositions prepared by including the conjugated diene-based polymers prepared using the catalyst compositions prepared in Examples 1 to 4 showed improved tensile properties, viscoelasticity properties and abrasion resistance in contrast to the rubber compositions prepared by including the conjugated diene-based polymers prepared by using the catalyst compositions prepared in Comparative Examples 1 to 3.

In contrast, it could be confirmed that the rubber composition prepared by including the conjugated diene-based polymer prepared by using the catalyst composition prepared in Comparative Example 1 showed degraded tensile properties, viscoelasticity properties and abrasion resistance in contrast to the rubber composition prepared by including the conjugated diene-based polymer prepared by using the catalyst composition prepared in Comparative Example 2.

Such results were obtained due to improved catalyst activity through the pre-treatment of a hydrogen-bonded lanthanide rare earth element compound and/or an oligomer type of a lanthanide rare earth element compound, which induce the deterioration of catalyst activity, prior to alkylation during preparing a catalyst composition for preparing a conjugated diene-based polymer.

From the results, it could be confirmed that the catalyst composition prepared according to the method for preparing a catalyst composition of the present invention shows excellent catalyst activity through the pre-treatment of a hydrogen-bonded lanthanide rare earth element compound and/or an oligomer type of a lanthanide rare earth element compound, which induce the deterioration of catalyst activity, prior to alkylation.

In addition, it could be confirmed that the conjugated diene-based polymer prepared according to the method for preparing a conjugated diene-based polymer of the present invention has the small content of the lantanide rare earth element remaining in the conjugated diene-based polymer, high cis bond content and linearity, and narrow molecular weight distribution due to high catalyst activity, and if applied to a rubber composition, shows excellent abrasion resistance and a low fuel consumption.

## Claims

1. A method for preparing a catalyst composition, the method comprising:
a step of performing pre-treatment reaction of a hydrogen bond, an oligomer type, or a combination thereof on a lanthanide rare earth element compound (S10);
a step of alkylation of mixing and reacting the lanthanide rare earth element compound of which the hydrogen bond, the oligomer type, or the combination thereof is pretreated in step (S10), with an alkylating agent (S20); and
a step of halogenation of mixing and reacting the alkylated lanthanide rare earth element compound in step (S20), with a halogen compound (S30), wherein
the step (S20) is continuously performed in multiple reactors connected in series.

2. The method for preparing a catalyst composition according to claim 1, wherein the step (S10) is performed by mixing and reacting the lanthanide rare earth element compound, with one or more trialkyl aluminums selected from the group consisting of trimethyl aluminum and triethyl aluminum.

3. The method for preparing a catalyst composition according to claim 2, wherein the step (S10) is performed before the alkylation of the lanthanide rare earth element compound by the trialkyl aluminum occurs.

4. The method for preparing a catalyst composition according to claim 1, wherein the lanthanide rare earth element compound is a neodymium compound represented by the following Formula 1: 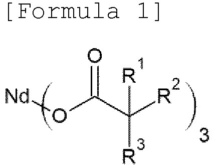 in Formula 1,
R¹ to R³ are each independently hydrogen or an alkyl group of 1 to 12 carbon atoms, where R¹ to R³ are not all hydrogen.

5. The method for preparing a catalyst composition according to claim 1, wherein the lanthanide rare earth element is one or more selected from the group consisting of Nd(2-ethyl hexanoate)₃, Nd(2,2-dimethyl decanoate)₃, Nd(2,2-diethyl decanoate)₃, Nd(2,2-dipropyl decanoate)₃, Nd(2,2-dibutyl decanoate)₃, Nd(2,2-dihexyl decanoate)₃, Nd(2,2-dioctyl decanoate)₃, Nd(2-ethyl-2-propyl decanoate)₃, Nd(2-ethyl-2-butyl decanoate)₃, Nd(2-ethyl-2-hexyl decanoate)₃, Nd(2-propyl-2-butyl decanoate)₃, Nd(2-propyl-2-hexyl decanoate)₃, Nd(2-propyl-2-isopropyl decanoate)₃, Nd(2-butyl-2-hexyl decanoate)₃, Nd(2-hexyl-2-octyl decanoate)₃, Nd(2,2-diethyl octanoate)₃, Nd(2,2-dipropyl octanoate)₃, Nd(2,2-dibutyl octanoate)₃, Nd(2,2-dihexyl octanoate)₃, Nd(2-ethyl-2-propyl octanoate)₃, Nd(2-ethyl-2-hexyl octanoate)₃, Nd(2,2-diethyl nonanoate)₃, Nd(2,2-dipropyl nonanoate)₃, Nd(2,2-dibutyl nonanoate)₃, Nd(2,2-dihexyl nonanoate)₃, Nd(2-ethyl-2-propyl nonanoate)₃, and Nd(2-ethyl-2-hexyl nonanoate)₃.

6. The method for preparing a catalyst composition according to claim 1, wherein the alkylating agent is an alkyl aluminum compound represented by the following Formula 2:
[Formula 2] AlR⁴R⁵R⁶
in Formula 2,
R⁴ to R⁶ are each independently hydrogen or an alkyl group of 1 to 12 carbon atoms, where R⁴ to R⁶ are not all hydrogen, and if all of R⁴ to R⁶ are alkyl groups, the carbon number of the alkyl group is 3 to 12.

7. The method for preparing a catalyst composition according to claim 1, wherein the alkylating agent is a dialkyl aluminum hydride.

8. The method for preparing a catalyst composition according to claim 1, wherein the pre-treatment reaction in the step (S10), the alkylation in the step (S20), or the pre-treatment reaction in the step (S10) and the alkylation in the step (S20) are performed by including a conjugated diene-based monomer.

9. The method for preparing a catalyst composition according to claim 1, wherein the halogen compound is one or more selected from the group consisting of an alkyl aluminum halide represented by the following Formula 3 and an alkyl aluminum sesquihalide represented by the following Formula 4:
[Formula 3] AlR⁷R⁸R⁹
in Formula 3,
R⁷ to R⁹ are each independently a halogen group or an alkyl group of 1 to 12 carbon atoms, where R⁷ to R⁹ are not all halogen groups, 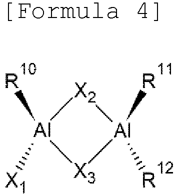
in Formula 4,
R¹⁰ to R¹² are each independently an alkyl group of 1 to 12 carbon atoms, and
X₁ to X₃ are each independently a halogen group.

10. The method for preparing a catalyst composition according to claim 1, wherein the halogen compound is one or more selected from the group consisting of a dialkyl aluminum halide and an alkyl aluminum sesquihalide.

11. The method for preparing a catalyst composition according to claim 1, wherein the step (S10), the step (S20) and the step (S30) are respectively performed in an individual reactor among the reactors connected in series.

12. The method for preparing a catalyst composition according to claim 1, wherein the step (S10), the step (S20) and the step (S30) are performed continuously.

13. The method for preparing a catalyst composition according to claim 1, wherein the alkylating agent is injected in installments to the multiple reactors connected in series.

14. A method for preparing a conjugated diene-based polymer, the method comprising a step of polymerizing a conjugated diene-based monomer in the presence of the catalyst composition prepared by the method for preparing a catalyst composition according to claim 1, in a hydrocarbon solvent to prepare an active polymer (S100).
